Europäisches Patentamt

European Patent Office

Office européen des brevets

(19)

(11) Veröffentlichungsnummer: **0 221 884**
**A1**

(12) **EUROPÄISCHE PATENTANMELDUNG**

(21) Anmeldenummer: 86890274.3

(51) Int. Cl.⁴: **E 21 D 9/10**

(22) Anmeldetag: 06.10.86

(30) Priorität: 08.11.85 AT 3253/85

(43) Veröffentlichungstag der Anmeldung:
13.05.87 Patentblatt 87/20

(84) Benannte Vertragsstaaten:
CH DE FR GB IT LI

(71) Anmelder: **VOEST-ALPINE Aktiengesellschaft**
**Friedrichstrasse 4**
**A-1011 Wien (AT)**

(72) Erfinder: **Schellenberg, Eduard, Dipl.-Ing.**
**Liebermannweg 32**
**A-4020 Linz (AT)**

**Steinbrucker, Gerhard, Dipl.-Ing.**
**Bessemerstrasse 30**
**A-8740 Zeltweg (AT)**

(74) Vertreter: **Haffner, Thomas M., Dr. et al**
**Patentanwaltskanzlei Dipl.-Ing. Adolf Kretschmer Dr.**
**Thomas M. Haffner Schottengasse 3a**
**A-1014 Wien (AT)**

(54) **Einrichtung zur Bestimmung der Fahrtrichtungsänderung einer Schrämmaschine.**

(57) Eine Einrichtung zur Bestimmung der Fahrtrichtungsänderung einer Schrämmaschine (5) wird durch wenigstens einen
um eine die Sohle der Strecke schneidende Achse (8) durch
einen Servomotor schwenkbar angeordneten Laserstrahlsender (2) und einen an der Schrämmaschine (5) angeordneten
Empfänger (4) gebildet. Der Empfänger (4) und der zur
Erfassung der Schwenkstellung des Senders (2) vorgesehene
Winkelstellungsgeber sind durch eine Auswerteschaltung (14)
verbunden.

In einer bevorzugten Weiterbildung ist der Sender in zwei
einander schneidende Ebenen schwenkbar angeordnet oder es
wird durch einen oszillierenden Schwenkantrieb des Senders
eine zeilenweise Abtastung eines Bereiches ermöglicht.

Zusätzlich kann an der Schrämmaschine ein Inklinometer (7)
angebracht und auch der Empfänger (4) orientierbar an der
Schrämmaschine (5) festgelegt sein, wobei die Signale des
Inklinometers (7) und des Winkelstellungsgebers des Empfängers (4) ebenfalls der Auswerteschaltung (14) zugeführt
werden.

Bei der Verwendung von flächigen Detektoren mit mehreren
strahlungsempfindlichen Bereichen kann der Schwenkantrieb
in Abhängigkeit des Intensitätsmaximums des Empfängersignales geregelt werden.

FIG. 2

EP 0 221 884 A1

**Beschreibung**

Einrichtung zur Bestimmung der Fahrtrichtungsänderung einer Schrämmaschine

Die Erfindung bezieht sich auf eine Einrichtung zur Bestimmung der Fahrtrichtungsänderung einer Schrämmaschine, mit einem in der Strecke angeordneten Laserstrahlsender und einem an der Maschine angeordneten Empfänger.

Für die Lagebestimmung von untertägigen Vortriebsmaschinen sind eine Reihe von mehr oder minder komplizierten Einrichtungen bekanntgeworden, welche durchwegs ausgehend von einer vorgegebenen Vortriebsrichtung nur einen eingeschränkten Bewegungsbereich der Maschine zulassen. Bei den bekannten Einrichtungen ist die Steuerung abhängig von dem Streckenleitstrahl, welcher üblicherweise von einem starr in der Strecke festgelegten Laser gebildet wird. Der Spielraum, über welchen die Schrämmaschine bzw. Vortriebsmaschine von der vorgegebenen Richtung abweichen darf, hängt von der Auftrefffläche des entsprechenden Empfängers an der Maschine ab. Zur Vergrößerung des Spielraumes, innerhalb dessen die Schrämmaschine gegenüber dem Streckenleitstrahl seitlich versetzt oder verdreht werden kann, ist es bereits bekanntgeworden, den Empfänger relativ zur Maschine zu bewegen und auf diese Weise zumindest über den Verschiebe- bzw. Bewegungsbereich des Empfängers noch ein Auftreffen des Laserstrahles auf dem Empfänger zu ermöglichen. Auch bei derartigen Ausbildungen ist naturgemäß die maximale Abweichung auf den maximalen Verschiebe- und/oder Schwenkweg des Empfängers an der Maschine beschränkt.

Die vorliegende Erfindung zielt nun darauf ab, eine möglichst einfache Erkennung für Fahrtrichtungsänderungen einer Schrämmaschine zu ermöglichen, und den Arbeitsbereich, innerhalb dessen derartige Änderungen der Fahrtrichtung erfaßt werden, zu vergrößern. Zur Lösung dieser Aufgabe besteht die Erfindung im wesentlichen darin, daß wenigstens der Sender um eine die Sohle der Strecke schneidende Achse schwenkbar angeordnet ist, daß der Schwenkantrieb des Senders von einem Servomotor gebildet ist, daß für die Erfassung der Schwenkstellung des Senders Winkelstellungsgeber vorgesehen sind, und daß der Empfänger und der Winkelstellungsgeber des Senders mit einer Auswerteschaltung verbunden sind. Dadurch, daß nun abweichend von den bekannten Konstruktionen der Sender selbst schwenkbar angeordnet ist, läßt sich durch Verschwenken des Senders ein großer Bereich von Positionsänderungen auch weit außerhalb eines Streckenleitstrahles erfassen. Der horizontale und gegebenenfalls auch vertikale Schwenkwinkel eines derartigen Senders gibt hiebei allerdings nur die Richtung an, in welcher sich der Empfänger befindet. Zu diesem Zweck sind die Winkelstellungsgeber des Senders und der Empfänger mit einer Auswerteschaltung verbunden. In Kenntnis der genauen Distanz des Empfängers vom Sender läßt sich bei Ermittlung von Raumwinkeln an sich bereits eine relativ exakte Positionsbestimmung der Schrämmaschine vornehmen. Für Richtungsänderungen genügt aber bereits die Änderung des Schwenkwinkels des Senders und es können wesentlich vereinfachte Methoden angewandt werden, um eine Korrektur der Fahrtrichtung der Schrämmaschine vorzunehmen. Selbst, wenn nämlich die genaue Distanz zwischen Empfänger und Sender nicht bekannt ist, läßt sich durch Änderung der Fahrtrichtungsvorgabe auf der Schrämmaschine und Kontrolle nach einem bestimmten Zeitintervall feststellen, ob die vorgesehene Fahrtrichtungsänderung zu den gewünschten Änderungen im gemessenen Schwenkwinkel des Senders führt. Sofern eine Mehrzahl derartiger an der Maschine unmittelbar vorgenommener Fahrtrichtungsänderungen registriert wird, läßt sich auch ohne Kenntnis der exakten Abstände zwischen Sender und Empfänger eine hinreichend genaue Lenkung der Schrämmaschine erzielen. Vor allen Dingen in Bereichen, in welchen nicht Strecken oder Tunnels vorgetrieben werden, sondern größere Hohlräume ausgeschrämt werden, wäre eine derartige Lenkung mit konventionellen Einrichtungen nicht ohne weiteres mög lich, da die Abweichung relativ zur Streckenachse beträchtlich sein kann.

In bevorzugter Weise ist die Ausbildung hiebei so getroffen, daß der Sender in zwei einander schneidenden Ebenen schwenkbar angeordnet ist, wobei für jede der beiden Schwenkebenen gesonderte Winkelstellungsgeber vorgesehen sind. Auf diese Weise werden Raumwinkel, d.h. eine horizontale und eine vertikale Verschwenkung, gemessen und es lassen sich bereits relativ präzise Regelungen der Fahrtrichtung aus derartigen Signalen ableiten. In vorteilhafter Weise ist die Ausbildung hiebei so getroffen, daß der Schwenkantrieb des Senders mit der Auswerteschaltung verbunden ist und daß der Schwenkantrieb nach Durchlaufen des Intensitätsmaximums des Empfängersignales zu gegenläufiger Bewegung angesteuert ist. Um ein derartiges Intensitätsmaximum feststellen zu können, sind in der Regel mehrere Sensoren im Empfänger erforderlich, wobei im einfachsten Falle vier Quadranten eines flächigen Detektors gesondert Signale geben. Das Intensitätsmaximum entspricht dann derjenigen Position, in welcher alle vier Quadranten in ihrem in der Mitte aneinander angrenzenden Bereich vom Sender beaufschlagt werden, so daß alle vier Quadranten des Empfängers ein Signal liefern. In vorteilhafter Weise ist der Schwenkantrieb des Senders in beiden Ebenen unabhängig voneinander in Abhängigkeit vom Intensitätsmaximum des Empfängersignals regelbar, wodurch eine relativ genaue Ermittlung der Richtung, in welcher der Empfänger relativ zum Sender orientiert ist, möglich ist. Die Meßempfindlichkeit kann noch dadurch erhöht werden, daß an der Schrämmaschine zusätzlich Inklinometer angeordnet sind, deren Signalleitungen mit der Auswerteschaltung verbunden sind.

In allen Fällen ist die Strahlrichtung des schwenkbaren Senders bezüglich eines Referenzstrahles, beispielsweise eines theoretischen Streckenleitstrahles, bekannt. Dieser Referenzwert muß zuvor eingegeben werden, um exakte Winkel messungen gegenüber einer eindeutigen Referenz zu messen. Bei der gleichzeitigen Verwendung eines Inklinometers an der Schrämmaschine wird zu jedem Zeitpunkt die Winkellage der Maschine in bezug auf den Streckenleitstrahl berechenbar. Wenn sich nun ausgehend von einer Orientierung, in welcher der Laserstrahl des orientierbaren Senders exakt auf den Detektor auftrifft, die Maschine aus der vorgegebenen Richtung heraus bewegt, dann wird zunächst die gemessene Strahlungsintensität geringer. Eine entsprechende Nachlaufregelung kann darauf abzielen, bei vorgegebener Strahlrichtung, diese Intensität wiederum auf ein Maximum zu bringen. Die Ausbildung kann aber auch so getroffen werden, daß der Laserstrahl oszillierend kontinuierlich über ein zu überwachendes Gebiet bewegt wird. Auf diese Weise wird zu bestimmten Zeitpunkten jeweils eine Winkellage gemessen, und wenn der Strahl den Empfänger trifft, liefert der Empfänger ein Signal. Die zu diesem Zeitpunkt gemessene Winkellage kann als Referenzwert angenommen werden, worauf selbst, wenn der exakte Abstand zwischen dem Empfänger und dem Sender nicht bekannt ist, eine Regelung so erfolgen kann, daß nach vorbestimmten Zeitintervallen die Auswirkung von Korrekturen der Fahrtrichtung der Schrämmaschine neuerlich ausgewertet wird. Die jeweils berechneten Korrekturgrößen können hiebei von früheren Korrekturgrößen und deren Auswirkungen abhängig gemacht werden, so daß jeweils nach vorbestimmten Zeitpunkten, festgestellt werden kann, ob die erfolgte Korrektur ausreichend war oder nicht. Wenn die jeweilige Korrektur nicht ausreichte, kann in der Folge in kürzeren Abständen eine kleinere Korrektur vorgegeben werden, um auf diese Art und Weise rascher die Auswirkung von Korrekturen ermitteln zu können.

Zu diesem Zweck ist die Ausbildung bevorzugt so getroffen, daß der oszillierende Schwenkantrieb des Senders nach einer Schwenkbewegung um eine die Sohle schneidende Achse zeilenweise in Richtung zur Sohle oder Firste versetzt wird und daß die Intensitätsmaxima des Empfängersignals über die Zeit erfaßt und durch die Auswerteschaltung auswertbar sind.

Um noch exaktere Auswertungen zu ermöglichen, kann in vorteilhafter Weise der Empfänger gleichfalls orientierbar an der Schrämmaschine festgelegt sein und mit einem Schwenkantrieb und Winkelstellungsgebern ausgestattet sein, während Signalleitungen mit der Auswerteschaltung verbunden sind.

Die Erfindung wird nachfolgend an Hand von in der Zeichnung schematisch dargestellten Ausführungsbeispielen näher erläutert. In dieser zeigen: Fig. 1 eine schematische Darstellung der Einrichtung in der Draufsicht, Fig. 2 eine vergrößerte Darstellung des schwenkbaren Senders mit einer möglichen Auswerteelektronik und Fig. 3 eine alternative Betriebsweise des schwenkbaren Senders mit entsprechend adaptierter Auswerteelektronik.

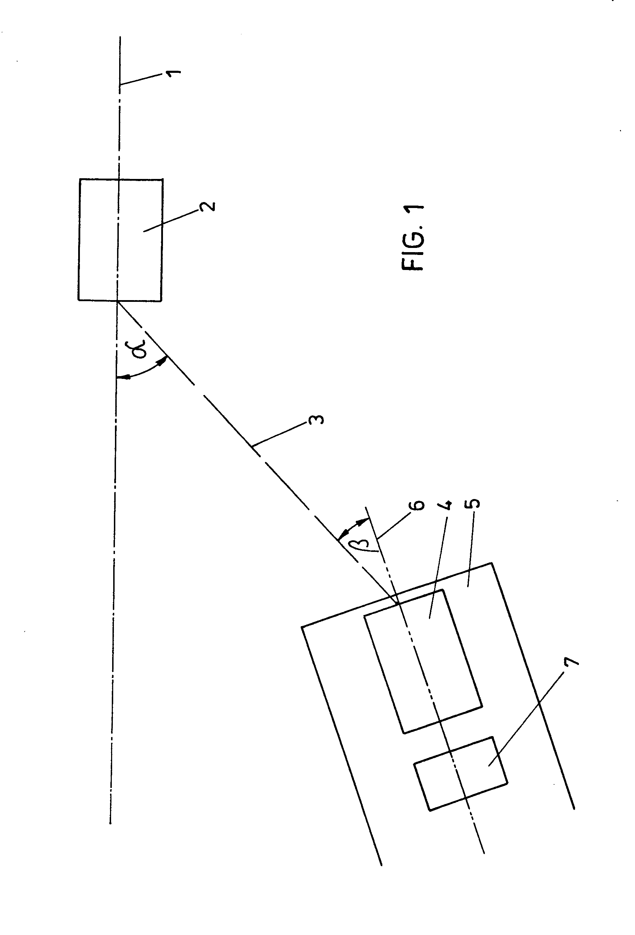

In Fig. 1 ist ein Streckenleitstrahl 1 angedeutet, welcher als Referenzwert für die nachfolgenden Messungen dient. Es ist ein schwenkbarer Laserstrahlsender 2 vorgesehen, welcher aus der dargestellten Lage in eine Lage verschwenkt werden kann, bei welcher der Laserstrahl 3 auf einen Empfänger 4 einer Schrämmaschine 5 auftrifft. Durch Verschwenken des Laserstrahlsenders 2 um einen Winkel wird ein Ersatzwinkel gemessen, welcher die Richtung der Abweichung der Position der Vortriebsmaschine ergibt. Die genaue Position der Vortriebsmaschine läßt sich beim Auftreffen des Laserstrahles 3 auf den Empfänger 4 noch nicht exakt angeben, da, wie die Zeichnung in Fig. 1 darstellt, die Maschine selbst aus der Achse des Laserstrahles 3 um einen Winkel verdreht sein kann. Es sind allerdings Detektorelemente bekannt, welche auch richtungsempfindlich ansprechen und entweder unmittelbar den Winkel meßtechnisch erfassen können oder durch Verschwenken des Empfängers 4 einen Winkelwert für den Winkel ergeben. Die Maschine selbst kann noch um ihre Maschinen längsachse 6 eine Rollbewegung ausführen, und derartige Abweichungen der Maschinenposition können beispielsweise durch Inklinometer 7 erfaßt werden, deren Signale gleichfalls einer Auswerteschaltung zugeführt werden können.

In Kenntnis der Winkel, und des Meßwertes des Inklinometers läßt sich bereits eine relativ exakte Voraussage über notwendige Korrekturen treffen.

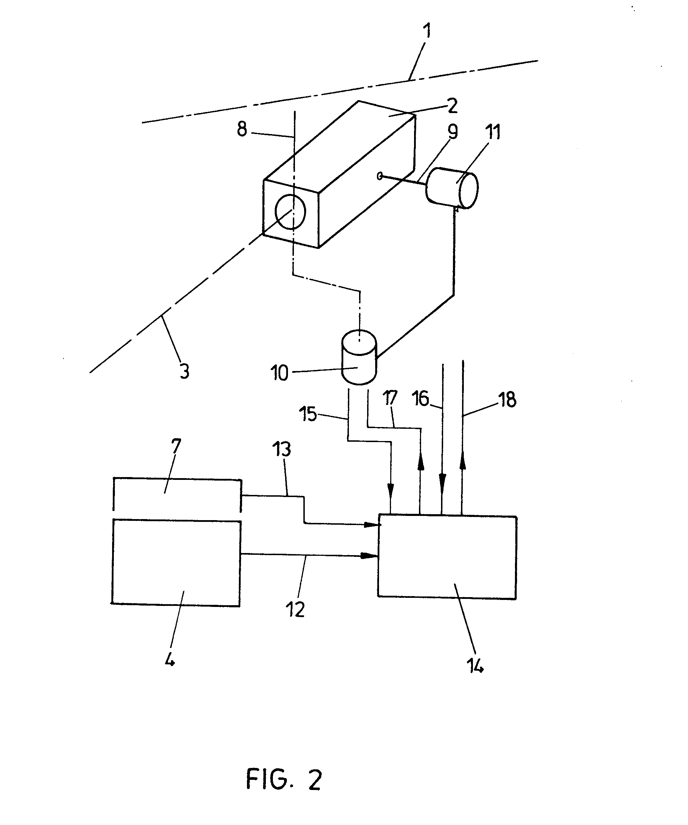

Bei der Ausbildung nach Fig. 2 ist nun ein schwenkbarer Laserstrahlsender 2 dargestellt, welcher um eine im wesentlichen vertikale Achse 8 und eine im wesentlichen horizontale Achse 9 schwenkbar gelagert ist. Der Schwenkantrieb wird jeweils von einem Servomotor 10 für die Verschwenkung in der Horizontalebene und einen Servomotor 11 für die Verschwenkung in der Vertikalebene bewirkt. Beide Servomotoren 10 und 11 sind mit Drehmeldern ausgestattet, so daß der horizontale bzw. vertikale Schwenkwinkel gemessen werden kann. Der Laserstrahl ist wiederum mit 3 bezeichnet, wohingegen der Streckenleitstrahl weiterhin mit 1 bezeichnet ist.

Die auf der Schrämmaschine 5 angeordneten Bauteile, nämlich der Strahlungsdetektor 4 bzw. Empfänger und das Inklinometer 7, sind über Signalleitungen 12 und 13 mit der Auswerteelektronik 14 verbunden. Bei entsprechender Ausbildung des Empfängers 4 läßt sich über die Signalleitung 12 auch die gemessene Strahlungsintensität in Abhängigkeit vom Einfallswinkel an die Steuerelektronik 14 weitergeben. Die Meßwerte der Drehmelder der Servomotoren 10 und 11 werden über Signalleitungen 15 und 16 an die Auswerteschaltung weitergegeben. Darüberhinaus sind Motoransteuerungsleitungen 17 für den Servomotor 10 und 18 für den Servomotor 11 vorgesehen. Mit einer derartigen Ausbildung lassen sich die in Fig. 1 schematisch angedeuteten Winkelmessungen durchführen.

Auch wenn bei einer derartigen Ausbildung der Abstand der Maschine zum Sender nicht ermittelt wird, läßt sich aus den gemessenen Winkelwerten schematisch folgende Aussage herleiten: Wenn lediglich der Winkel berücksichtigt wird und dieser Winkel groß wird, ist die erforderliche Korrekturmaßnahme für die Richtungsvorgabe der Schrämmaschine auf ein Drehen der Maschine beschränkt. Wenn sowohl der Winkel als auch der Winkel zu große Werte annehmen, dann ist neben einem Drehen auch noch ein Versetzen der Maschine erforderlich. Wenn lediglich der Winkel zu große Werte annimmt, ist zumindest ein Versetzen und in der Folge auf Grund der Versetzung ein Drehen der Maschine erforderlich.

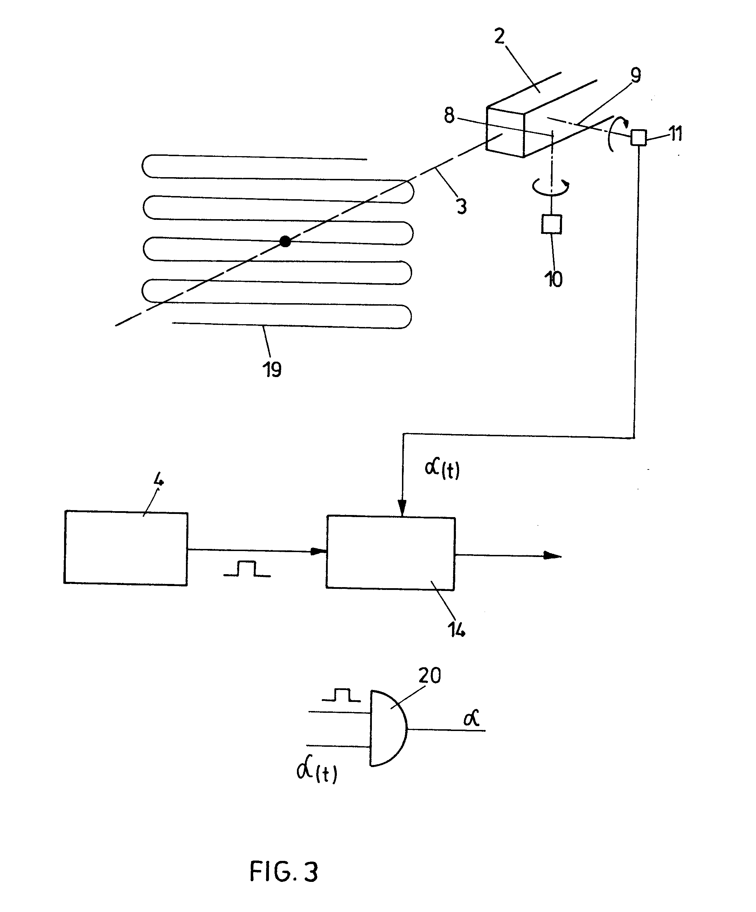

In Fig. 3 ist nun eine alternative Art der Auswertung der von den Drehmeldern der Servomotoren gelieferten Meßwerte schematisch dargestellt. Der Lasersender 2 wird bei dieser Ausbildung kontinuierlich zeilenförmig in Richtung der Abtastlinie 19 bewegt. Bei dieser kontinuierlichen oszillierenden Bewegung erfolgt jedesmal dann ein Signal, wenn der Laserstrahl bei seinem Schwenkweg auf den Empfänger 4 auftrifft. Der Empfänger 4 liefert bei dieser Ausbildung einen Auftreffimpuls, welcher mit dem zum jeweiligen Zeitpunkt gemessenen Schwenkwinkel (t) in der Auswerteschaltung 14 verknüpft wird. Die Verknüpfung kann durch ein einfaches UND-Gatter 20 erfolgen, wobei bei gleichzeitigem Auftreten eines Impulses der jeweilige (t)-Wert auf horizontale und vertikale -Werte analysiert wird. Aus diesen beiden Winkeln ergibt sich ein Versetzwinkel, und es kann in der Folge eine einfache Folgesteuerung eingesetzt werden, um die in Fig. 1 schematisch dargestellten Bedingungen einzuhalten. Die Regelabweichungen können in einer vorgegebenen Bandbreite liegen. Sofern mit einer Schaltungsanordnung, wie sie schematisch in Fig. 2 dargestellt ist, gearbeitet wird, kann eine Ermittlung der Regelabweichung in horizontaler und vertikaler Richtung gesondert vorgenommen werden, wobei diese Regelungen hintereinander auf maximale Strahlungsintensität am Empfänger vorgenommen werden. Bei Verwendung eines Empfängers. welcher mehrere strahlungsempfindliche Bereiche in geometrischer Konfiguration enthält, ist eine Verschwenkung des Empfängers nicht erforderlich, da die Winkelabweichung des Winkels unmittelbar vom Empfänger in einer einzigen Orientierung registriert wird. Die Auswertung der - und -Winkelwerte kann in der Folge so erfolgen, daß das Sollprofil relativ zur Maschine gedreht, gekippt oder vertikal bzw. horizontal versetzt wird. Eine derartig neue Sollprofilvorgabe führt in der Folge zu einer entsprechenden Korrektur der Bewegungsrichtung der Maschine. Die erfindungsgemäße Einrichtung eignet sich in hohem Maße auch für den Tagebau. bei welchem üblicherweise großräumige Abweichungen der Position einer Maschine beobachtet werden. Es können mit einem einzigen Lasersender eine Mehrzahl von Maschinen überwacht werden, wobei bei Verwendung zweier schwenkbarer Empfänger unmittelbar durch Triangulieren und trigonometrische Auswertung die Position einer Mehrzahl von Maschinen überwacht werden kann.

## Patentansprüche

1. Einrichtung zur Bestimmung der Fahrtrichtungsänderung einer Schrämmaschine (5), mit einem in der Strecke angeordneten Laserstrahlsender (12) und einem an der Maschine (5) angeordneten Empfänger (4). dadurch gekennzeichnet, daß wenigstens der Sender (2) um eine die Sohle der Strecke schneidende Achse (8) schwenkbar angeordnet ist, daß der Schwenkantrieb des Senders (2) von einem Servomotor (10) gebildet ist, daß für die Erfassung der Schwenkstellung des Senders (2) Winkelstellungsgeber vorgesehen sind, und daß der Empfänger (4) und der Winkelstellungsgeber des Senders (2) mit einer Auswerteschaltung (14) verbunden sind.

2. Einrichtung nach Anspruch 1, dadurch gekennzeichnet, daß der Sender (2) in zwei einander schneidenden Ebenen schwenkbar angeordnet ist.

3. Einrichtung nach Anspruch 1 oder 2, dadurch gekennzeichnet, daß der Schwenkantrieb (10, 11) des Senders (2) mit der Auswerteschaltung (14) verbunden ist und daß der Schwenkantrieb (10, 11) nach Durchlaufen des Intensitätsmaximums des Empfängersignales zu gegenläufiger Bewegung angesteuert ist.

4. Einrichtung nach Anspruch 1, 2 oder 3, dadurch gekennzeichnet, daß der Schwenkantrieb (10, 11) in beiden Ebenen unabhängig voneinander in Abhängigkeit vom Intensitätsmaximum des Empfängersignales regelbar ist.

5. Einrichtung nach einem der Ansprüche 1 bis 4, dadurch gekennzeichnet, daß an der Schrämmaschine (5) zusätzlich Inklinometer (7) angeordnet sind, deren Signalleitungen (13) mit der Auswerteschaltung (14) verbunden sind.

6. Einrichtung nach einem der Ansprüche 1 bis 5, dadurch gekennzeichnet, daß der oszillierende Schwenkantrieb (10, 11) des Senders (2) nach einer Schwenkbewegung um eine die Sohle schneidende Achse (8) zeilenweise in Richtung zur Sohle oder Firste versetzt wird und daß die Intensitätsmaxima des Empfängersignals über die Zeit erfaßt und durch die Auswerteschaltung (14) auswertbar sind.

7. Einrichtung nach einem der Ansprüche 1 bis 6, dadurch gekennzeichnet, daß der Empfänger (4) gleichfalls orientierbar an der Schrämmaschine (5) festgelegt ist und mit einem Schwenkantrieb und Winkelstellungsgebern ausgestattet ist, deren Signalleitungen mit der Auswerteschaltung (14) verbunden sind.

FIG. 1

0221884

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-B-1 473 931  (CONTRAVES) * Figuren 1, 2 * | 1 | E 21 D    9/10 |
| A | DE-A-2 030 126  (COMPAGNIE INDUSTRIELLE DES LASERS) * Anspruch 1 * | 1 | |
| A | DE-A-2 511 419  (GEBR. EICKHOFF, MASCHINENFABRIK U. EISENGIESSEREI) * Seite 8, Absatz 2 * | 1,2 | |
| A | SOVIET INVENTIONS ILLUSTRATED, Sektion Mechanik, Woche 8536, 17. Oktober 1985, Zusammenfassungs Nr. 222 004, Q49, Derwent Publications Ltd., London, GB; & SU - A - 1 138 496 (ORE SITE DRYING) 07.02.1985 | 1 | |

RECHERCHIERTE SACHGEBIETE (Int. Cl.4)

E 21 D    9/10
E 21 D    9/00
E 21 C   35/24

Der vorliegende Recherchenbericht wurde für alle Patentansprüche erstellt.

| Recherchenort | Abschlußdatum der Recherche | Prüfer |
|---|---|---|
| BERLIN | 10-12-1986 | ZAPP E |